(19)

Europäisches Patentamt
European Patent Office
Office européen des brevets

(11)  **EP 4 395 220 A1**

(12)  **EUROPEAN PATENT APPLICATION**

(43) Date of publication:
**03.07.2024  Bulletin 2024/27**

(21) Application number: **23202876.1**

(22) Date of filing: **11.10.2023**

(51) International Patent Classification (IPC):
**H04L 5/00** (2006.01)  **H04L 27/26** (2006.01)
**H04L 27/30** (2006.01)

(52) Cooperative Patent Classification (CPC):
**H04L 5/0039; H04L 27/2602; H04L 27/2634;
H04L 27/2697; H04L 27/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022  FI 20226189**

(71) Applicant: **Nokia Technologies Oy
02610 Espoo (FI)**

(72) Inventors:
• **SAAD, Majed
Massy (FR)**
• **PERUGA NASARRE, Ismael
Madrid (ES)**
• **MASO, Marco
Issy les Moulineaux (FR)**
• **NHAN, Nhat-Quang
Reims (FR)**

(74) Representative: **Nokia EPO representatives
Nokia Technologies Oy
Karakaari 7
02610 Espoo (FI)**

(54)  **RESOURCE SET SHIFT INDEX MODULATION FOR COVERAGE ENHANCEMENT**

(57)  Disclosed is a method comprising obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

FIG. 3

**Description**

**Field**

The following example embodiments relate to wireless communication and using index modulation to enhance coverage.

**Background**

Wireless communication networks, such as cellular communication networks evolve and techniques that enable enhanced capacity coverage are of interest. Index modulation (IM) may be used to convey implicit information bits by changing a state of a communication system. The state of the communication system may be represented by a certain index. Compared to systems using amplitude, phase or frequencies to convey information, index modulation thus alters a system state in order to convey additional information bits.

**Brief Description**

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, to cause the apparatus at least to: obtain a transmission bit stream for transmission on at least one resource set, allocate the transmission bit stream, at least partly, to a sub-stream, determine an index based on the sub-stream, determine, based on the index, a shift of a contiguous resource set, wherein the contiguous resource set is a subset of the at least one resource set, apply the shift to the contiguous resource set, and deactivate the shifted contiguous resource set.

According to a third aspect there is provided a method comprising: obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

In some example embodiments according to the third aspect the method is a computer implemented method.

According to a fourth aspect there is provided a computer program comprising instructions which, when executed by an apparatus, cause the apparatus to perform at least the following: obtain a transmission bit stream for transmission on at least one resource set, allocate the transmission bit stream, at least partly, to a sub-stream, determine an index based on the sub-stream, determine, based on the index, a shift of a contiguous resource set, wherein the contiguous resource set is a subset of the at least one resource set, apply the shift to the contiguous resource set, and deactivate the shifted contiguous resource set.

According to a fifth aspect there is provided a computer program comprising instructions stored thereon for performing at least the following: obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

According to a sixth aspect there is provided a non-transitory computer readable medium comprising program instructions that, when executed by an apparatus, cause the apparatus to perform at least the following: obtain a transmission bit stream for transmission on at least one resource set, allocate the transmission bit stream, at least partly, to a sub-stream, determine an index based on the sub-stream, determine, based on the index, a shift of a contiguous resource set, wherein the contiguous resource set is a subset of the at least one resource set, apply the shift to the contiguous resource set, and deactivate the shifted contiguous resource set.

According to a seventh aspect there is provided a non-transitory computer readable medium comprising program instructions stored thereon for performing at least the following: obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

According to an eighth aspect there is provided a computer readable medium comprising program instructions that, when executed by an apparatus, cause the apparatus to perform at least the following: obtain a transmission bit stream for transmission on at least one resource set, allocate the transmission bit stream, at least partly, to a sub-stream, determine an index based on the sub-stream, determine, based on the index, a shift of a contiguous resource set, wherein the contiguous resource set is a subset of the at least one resource set, apply the shift to the contiguous resource set, and deactivate the shifted contiguous resource set.

According to a ninth aspect there is provided a computer readable medium comprising program instructions stored thereon for performing at least the following: obtaining a transmission bit stream for transmission on at least one resource set, allocating the transmission bit stream, at least partly, to a sub-stream, determining an index based on the sub-stream, determining, based on the index, a shift of a contiguous resource set, wherein the contiguous resource set is a subset of the at least one resource set, applying the shift to the contiguous resource set, and deactivating the shifted contiguous resource set.

According to a tenth aspect there is provided an apparatus comprising means for performing: receiving a transmission on at least one resource set, determining that a contiguous resource set is deactivated, wherein the contiguous resource set is a subset of the at least one resource set, determining a shift applied to the contiguous resource, determining an index based on the shift, and detecting, at least partly based on the index, a transmission bit stream comprised in the transmission.

In some example embodiments according to the tenth aspect, the means comprises at least one processor, and at least one memory storing instructions that, when executed by the at least one processor, to cause the performance of the apparatus.

According to an eleventh aspect there is provided an apparatus comprising at least one processor, and at least one memory storing instructions that, when executed by the at least one processor, to cause the apparatus at least to: receive a transmission on at least one resource set, determine that a contiguous resource set is deactivated, wherein the contiguous resource set is a subset of the at least one resource set, determine a shift applied to the contiguous resource, determine an index based on the shift, and detect, at least partly based on the index, a transmission bit stream comprised in the transmission.

According to a twelfth aspect there is provided a method comprising: receiving a transmission on at least one resource set, determining that a contiguous resource set is deactivated, wherein the contiguous resource set is a subset of the at least one resource set, determining a shift applied to the contiguous resource, determining an index based on the shift, and detecting, at least partly based on the index, a transmission bit stream comprised in the transmission.

In some example embodiment according to the twelfth aspect the method is a computer implemented method.

According to a thirteenth aspect there is provided a computer program comprising instructions which, when executed by an apparatus, cause the apparatus to perform at least the following: receive a transmission on at least one resource set, determine that a contiguous resource set is deactivated, wherein the contiguous resource set is a subset of the at least one resource set, determine a shift applied to the contiguous resource, determine an index based on the shift, and detect, at least partly based on the index, a transmission bit stream comprised in the transmission.

According to a fourteenth aspect there is provided a computer program comprising instructions stored thereon for performing at least the following: receiving a transmission on at least one resource set, determining that a contiguous resource set is deactivated, wherein the contiguous resource set is a subset of the at least one resource set, determining a shift applied to the contiguous resource, determining an index based on the shift, and detecting, at least partly based on the index, a transmission bit stream comprised in the transmission.

According to a fifteenth aspect there is provided a non-transitory computer readable medium comprising program instructions that, when executed by an apparatus, cause the apparatus to perform at least the following: receive a transmission on at least one resource set, determine that a contiguous resource set is deactivated, wherein the contiguous resource set is a subset of the at least one resource set, determine a shift applied to the contiguous resource, determine an index based on the shift, and detect, at least partly based on the index, a transmission bit stream comprised in the transmission.

According to a sixteenth aspect there is provided a non-transitory computer readable medium comprising program instructions stored thereon for performing at least the following: receiving a transmission on at least one resource set, determining that a contiguous resource set is deactivated, wherein the contiguous resource set is a subset of the at least one resource set, determining a shift applied to the contiguous resource, determining an index based on the shift, and detecting, at least partly based on the index, a transmission bit stream comprised in the transmission.

According to a seventeenth aspect there is provided a computer readable medium comprising program instructions that, when executed by an apparatus, cause the apparatus to perform at least the following: receive a transmission on at least one resource set, determine that a contiguous resource set is deactivated, wherein the contiguous resource set is a subset of the at least one resource set, determine a shift applied to the contiguous resource, determine an index based on the shift, and detect, at least partly based on the index, a transmission bit stream comprised in the transmission.

According to an eighteenth aspect there is provided a computer readable medium comprising program instructions stored thereon for performing at least the following: receiving a transmission on at least one resource set, determining that a contiguous resource set is deactivated, wherein the contiguous resource set is a subset of the at least one resource set, determining a shift applied to the contiguous resource, determining an index based on the shift, and detecting, at least partly based on the index, a transmission bit stream comprised in the transmission.

**List of Drawings**

In the following, the invention will be described in greater detail with reference to the embodiments and the accompanying drawings, in which

FIG. 1 illustrates an example embodiment of a radio access network.
FIG. 2 illustrates an example embodiment of resource set shift with a group of sub-carriers.
FIG. 3 illustrates an example embodiment of a transmitter and a receiver.
FIG. 4 illustrates a graph for a comparison between the solution introduced in the example embodiment of FIG. 3 and when index modulation is not utilized.
FIG. 5 and FIG. 6 illustrate example embodiments of an apparatus.

**Description of Embodiments**

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, and/or a fifth generation (5G), as well as 5G-Advanced (i.e. 3GPP NR Rel-18 and beyond), mobile or cellular communication system. Also, the embodiments described herein may be implemented in a 6G communication system as well. The embodiments are not, however, restricted to the system given as an example but a person skilled in the art may apply the solution to other communication systems provided with necessary properties.

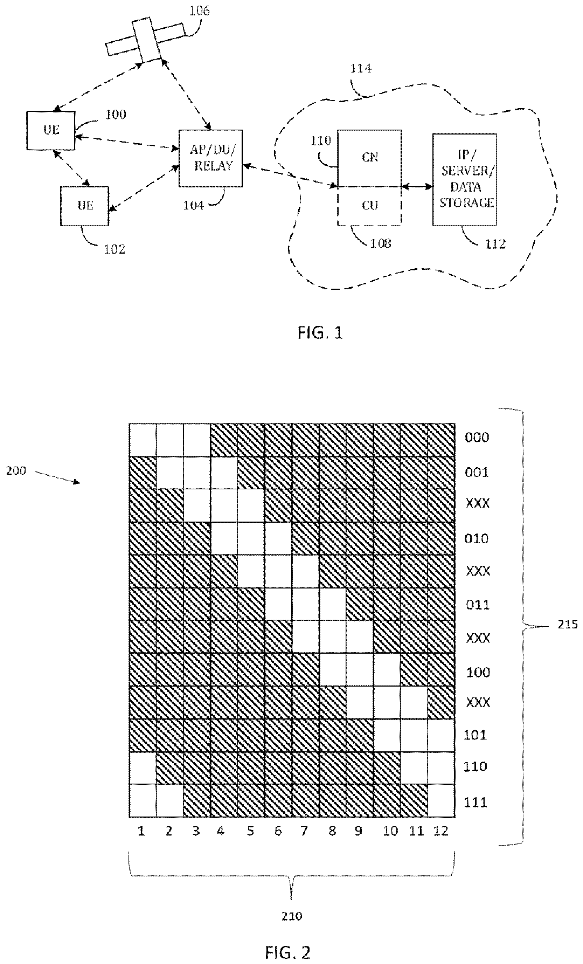

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a node, network node, network device, gNB, gNodeB, NB, Node B, or base station. The wireless link from a terminal device to a (e/g)NodeB is called uplink or reverse link and the wireless link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example. The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input- multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed.

5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Satellite communication may utilise geostationary earth orbit (GEO) satellite systems, but also low earth orbit (LEO) satellite systems, for example, mega-constellations. A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

Index modulation (IM) may be used to convey information bits implicitly by changing a state of a communication system such as a transmission between an access node and a terminal device comprised in a cellular communication network. For example, IM may be based on activation states, or a selection of pre-defined state(s), of some resources that may be physical, such as antenna, subcarrier, time slot, and frequency carrier, or the resources may be virtual, such as virtual parallel channels, space-time matrix, precoding matrix, and activation order, etc.. The access node may transmit the transmission that is received by the terminal device or vice versa. IM bits may be conveyed in an implicit manner, and the IM bits may be bits that are additional bits for a transmission or just IM bits may be transmitted. For example, the IM bits may be additional bits to bits corresponding to modulation symbols such as quadrature amplitude modulation (QAM) bits. The state of the communication system may be controllable at a transmitter used to transmit signal in the communication system and also detectable at a receiver used to receive the transmitted signal with embedded implicit data in the communication system.

For example, spatial IM may be used for activating transmit antenna(s) or targeting receive antenna(s) such that the activated transmit antenna(s) or the targeted receive antenna(s) are indexed for conveying implicit bits, which may be understood as IM bits implicitly conveyed by a selected state within transmission signal that is transmitted using selected transmit (Tx) antenna(s) or targeted towards selected receive (Rx) antenna(s). In other words, by indexing antennas, the activated antennas then have a corresponding index and during the transmission, the index of the activated antenna or antenna set may be used to implicitly convey information bits that may be understood as IM bits. As such, IM bits may be conveyed by the index of activated one or more Tx antennas and the transmission is performed using the activated one or more Tx antennas the index of which correspond to the IM bits implicitly conveyed. IM bits may be received on the other hand when targeted one or more Rx antennas are used for receiving a transmission and the targeted one Rx antenna or set of antennas have a corresponding index that correspond to IM bit thus implicitly conveyed. Further, one or more time slots or one or more subcarriers from a group of reserved set may be activated to transmit information such that IM is utilized in time and frequency domains respectively.

In some examples a transmitter unit and a receiver unit may be used in a transmission system for transmitting signals. The transmitter unit may be in one device and the receiver unit may be in another device. The transmitter unit may obtain a data stream that comprises bits that are to be transmitted, in other words, transmission (TX) bits that may also be understood as a bit stream for transmission. The TX bits may then be processed using a serial-to-parallel converter unit that provides two sub-streams of the transmission TX bits. A sub-stream may thus be understood as a transmission bit stream that comprises, at least partly, the TX bits. Thus, the sub-stream may comprise a sub-set of the TX bits or, in some examples, all the TX bits in case the other sub-stream is empty. It is to be noted that TX bits may be understood as those bits that are to be transmitted and the transmission may be implicitly through IM, or explicitly by a modulation symbol within the transmitted signal, or by using a combination of both. One of the sub-streams is then allocated to an index selector unit for the bit stream to be mapped to an index that selects a certain state among a finite set of possibilities. The state can be understood as a state of the communication system the transmitter and the receive units are comprised in. The other one is allocated to an amplitude phase modulation (APM) unit for mapping to M-ary Amplitude Phase Modulation (APM) symbols such as quadrature amplitude modulation (QAM) and phase-shift keying (PSK). The indexation allows to convey implicitly information bits using IM through the index of the selected state of the communication system. It is to be noted that the possible states are to be detectable at the receiver unit to recover the information bits conveyed implicitly by the selected state and then allow the detection of transmitted APM symbol(s) if any.

Thus, the sub-streams may then be passed to a selected and indexed transmission entity, that may then use resources such as antennas, subcarriers, time slots and radio frequency (RF) mirrors. For example, when transmitting spatial IM, index selector selects which Tx antenna(s) are to be used for the transmission of current symbol(s). If for example there are 4 Tx antennas available for spatial IM transmission and one Tx antenna is used for the transmission of the current symbol, then there are four possible transmission states and implicitly two bits may be conveyed by these states. After the transmission, the fading channel, RF impairments, and Gaussian Thermal Noise together affect the transmitted bit stream that is then received as in input by a receiving (RX) entity of the receiver. The RX entity may use resources such as antennas or photodiodes for receiving the transmit signal. Then the received signal is again passed to two sub-streams one of which is provided to an index detector/demapper unit and the other one is provided to an APM detector/demapper. It is to be noted that the passing may be done in parallel. Alternatively, the detector unit and the demapper could be placed sequentially such that the IM detector(s)/demapper(s) are first and then APM detector(s)/demapper(s). Further alternatively there may be a joint detector/demapper for APM and IM state. It is still further to be noted that the transmission system may comprise in some examples more than 2 IM detectors with multi-dimensional IM and one single detector for the case with only IM bits transmission and no APM symbols. Then the substreams may be combined using the parallel-to-serial converter that then provides as its output the received bits, RX bits.

It is to be noted though that in the example described above the APM mapper/demapper unit may be deactivated, or even omitted, when the system is used to transmit just IM bits without transmitting modulation symbols, thereby not transmitting APM sub-streams. If the APM mapper/demapper is not used, then the serial to parallel converter, as well as the parallel to serial converter, may also be omitted. It is further to be noted that also multi-dimensional IM may be utilized and in such as case, there may be multiple index selectors that are utilized meaning that an IM bit sub-stream may be divided to further sub-streams.

A resource set may be understood as a group of sub-carriers comprising at least one resource block. Resource set shift index modulation (RSS-IM) may be understood as transmitting a first number $N_a$ of subcarriers (SC) that carry symbols from an M-ary APM alphabet (e.g., QAM, PSK, etc.) in each group of a second number $N_g$ of SCs, wherein $N_a < N_g$, and additional bits are implicitly conveyed through an index of selected contiguous frequency resource set shift in each group. RSS-IM may be described for example in the frequency domain with subcarriers for orthogonal frequency-division multiplexing (OFDM or CP-OFDM, or DFT-s-OFDM). The total number N of allocated SCs could be divided into G groups having $N_g$ of SCs each. Each of the G number of groups may thus have $N_g$ of SCs and of those $N_a$ SCs that are activate and may thus convey the IM bits. The shift of $N_a$ SCs may be indexed independently to convey implicit IM bits. The shift may be for example a shift in a frequency location and the shift may be for example a cyclic shift. It is to be noted that when no APM symbols are transmitted, there may be just the IM bits transmitted. For example, a constant power may be used on active subcarriers and just the shift index is used for conveying information bits, that is, the IM bits.

FIG. 2 illustrates an example embodiment in which all possible RSSs of a set of 9 activated SCs 210 out of a group of 12 comprised in one physical resource block (PRB) with 1 resource element (RE) shift which is used to obtain 12 different shifted sets 215. In this example embodiment, the shift is a cyclic shift. A shifted set may be understood to correspond to a state of the communication. In FIG. 2 each row illustrates a possible pattern of implicitly conveyed IM bits. To avoid detection ambiguity, a discard rule may be used. Thus, in this example embodiment, 4 shifts may be discarded as marked by "XXX". In this example embodiment, the 4 shifts are discarded from 12 to have power of 2 number of patterns and an integer number of bits. As such the number of patterns may be denoted as $2^{\lfloor log_2(N_{shift}) \rfloor}$

and the number of bits conveyed is an integer number $\lfloor log_2(N_{shift}) \rfloor$. Thus, in this example embodiment, 8 shifts are required and therefore, 3 IM bits as $2^3 = 8$. Another discard rule may be used, for example, to achieve better adjacent channel leakage ratio (ACLR). For example, to achieve lower ACLR, the possible set of patterns may be generated by favoring sets with zero/deactivated SC on the edges of the allocation and by discarding the required number of other patterns. For better detection, in an alternative example, increasing a shift gap between consecutive patterns by using for example 2 REs instead of 1 RE, may be favored and/or to discard every other shift pattern to reduce the similarity between the possible patterns. It is to be noted that the discard rules may be applied to generate the allowed indexation patterns, and within one configuration variant the discard rules may be configurable.

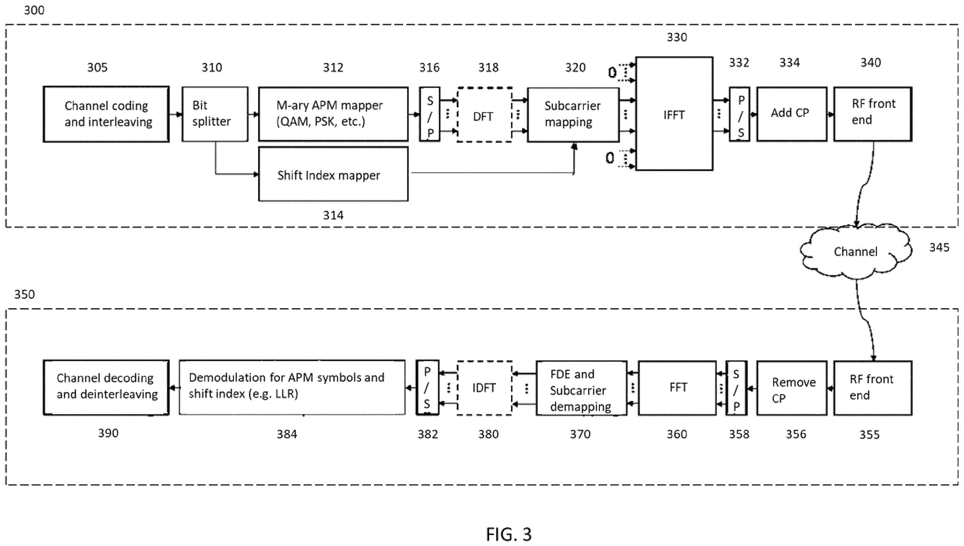

FIG. 3 illustrates an example embodiment of a transmitter 300 used to transmit TX bits and a receiver 350 used to receive the transmitted bits, that is, to receive RX bits. In other words, the transmitter 300 obtains a transmission bit stream for transmission and the transmission bit stream may be for example to transmit data. Further, the transmission of the transmission bit stream may be performed using at least one resource set. The receiver 350 may be comprised in a terminal device and the transmitter 300 may be comprised in an access node or vice versa. The units in this example embodiment may be understood as logical units for illustration purposes and the actual implementation may be any suitable implementation. The transmitter 300 and the receiver 350 are comprised in the same communication system, such as in a cellular communication network and the transmission is transmitted using the channel 345.

The transmitter 300 receives as an input the transmission bit stream that is to be transmitted, in other words, the TX bits. The TX bits are first, optionally, processed using a channel coding and interleaving unit 305. Then after this, the TX bit stream may be split into a first sub-stream and a second sub-stream using the bit splitter unit 310. The first sub-stream is allocated to the unit 312 for M-ary APM mapping such as a QAM or PSK mapper. The second sub-stream is allocated to the unit 314 shift index mapping in which the second sub-stream is mapped to an index of Resource set shift (RSS) for each sub-group to convey additional information bits. In some example embodiments though, all bits could be allocated to the unit 312, while no bits would be allocated to the unit 314, or vice versa. Thus, the transmission bit stream may be split, at least partly, into at least one sub-stream, wherein the sub-stream comprises, at maximum, the transmission bit-stream. If all bits are allocated to the unit 314, then that results in an empty APM sub-stream and no APM symbol transmission, in other words, M-ary transmission, or M-ary symbols, would equal to one thus providing for example constant power. Thus, in some example embodiments, the first sub-stream may be an empty sub-stream and the transmitted bits may be implicit bits. It is to be noted that the length of the first sub-stream corresponds to $GN_a$.

$\log_2(M)$ bits and the length of the second sub-stream corresponds to $G\lfloor\log_2(N_{shift})\rfloor$ bits, and the number of possible shifts for resource set $N_{shift}$ depends on the sub-group size $N_g$ and the used shift to generate the possibilities, for example, using a shift by 1 RE, 2 RE, etc. The allocated bandwidth depends on $GN_g$ subcarriers equal to any 5G allocation (e.g., any FDRA), but the activated subcarriers are $GN_a$ subcarriers ($N_a < N_g$). Hence, it is clear that the reduction of used resources in RSS-IM from $GN_g$ to $GN_a$ allows to increase the power of activated REs without increasing total transmit power and to obtain a power spectral density (PSD) boost (equivalently SNR per RE boost, or energy per resource element (EPRE) boost).

In this example embodiment, the transmitter 300 further performs serial-to-parallel conversion 316 and a discrete Fourier transformation (DFT) 318 to the first sub-stream of APM symbols. It is to be noted though that the DFT may alternatively be disabled for having OFDM. When the DFT is enabled, then DFT spread OFDM (DFT-s-OFDM) is obtained. In this example embodiment, after the DFT 318 the sub-carrier mapping unit 320 receives the first symbols stream and the second indices stream as input. As such the unit 320 receives the first sub-stream comprising APM symbols, or alternatively DFT spread APM symbols, and the second sub-stream comprising a stream of indices and the indices are mapped to a certain RSS pattern. The unit 320 then maps the first sub-stream to corresponding data subcarriers (SCs) based on the index of RSS for each group. Thus, the sub-carrier mapping unit 320 receives the first bitstream and the second bitstream after the first bitstream has been M-ary APM mapped, converted using a serial-to-parallel conversion and transformed using a discrete Fourier transformation, provided that it is enabled, and after the second bit stream has been processed by the shift index mapper unit 314. The sub-carrier mapping unit 320 then distributes the first sub-stream to activated SCs, the activation being determined based on the indices, and the deactivated SCs may be set to zero. The sub-carrier mapping unit 320 then provides an output in which the TX bits are mapped to the subcarriers used to transmit the transmission that comprises the TX bits. The activated SCs thus perform explicit data transmission as the TX bits are transmitted using the activated SCs. The deactivated SCs can thus be considered as deactivated in terms of explicit data transmission as they are used just for implicit data transmission, in other words, the deactivated SCs are dedicated just for implicit data transmission.

For the TX bits to be transmitted an inverse fast Fourier transformation 330 is performed next after which a parallel-to-serial conversion 334 is performed. Then a prefix, such as cyclic prefix (CP), unique words (UW), known-tail (KT), zero-prefix or guard interval, is added, and an RF frontend 340 is used to transmit a signal that corresponds to the TX bits, in other words, the signal carried the data corresponding to the bits to be transmitted, via the channel 345. The deactivated SCs may thus be determined based on an index and the deactivated SCs are a contiguous resource set that is a subset of the at least one resource set. Resources of a relative complement of the contiguous resource set with respect to the at least one resource set is then used to transmit symbols of M-ary amplitude phase modulation. It is to be noted that determining of the contiguous resource set comprises determining a frequency location of resources of the contiguous resource set or determining a shift, that may be a frequency shift, of the contiguous resource set. The frequency shift may be with respect to an earlier frequency location of the contiguous frequency shift. If the shift, for example a cyclic shift, is applied to the contiguous resource set and the contiguous resource set is deactivated, then the deactivated contiguous resource set may be understood to be deactivated with respect to explicit data transmission on the contiguous resources set.

It is to be noted that additionally the transmitter 300 may be configured to perform bit level interleaving such that systematic bits are mapped to the one or more sub-streams. For example, the systematic bits may be interleaved to the one or more sub-streams based on robustness of the one or more sub-streams. The robustness may be the robustness of the individual sub-streams comprised in the one or more sub-streams. This may be performed by at least one of the following: an APM symbol mapper or shift index mapper. The interleaving may be adaptively performed. It is further to be noted that additionally the transmitter 300 may be configured to perform interleaving on a symbol level. Symbols that are determined to be most critical may thus be mapped to an edge of a deactivated SC(s) and mapping to the edge of the deactivated SC(s) may be understood as mapping to the SC(s) adjacent to the edge of the deactivated SC(s) but outside of the deactivated SC(s). This may allow benefitting form a lower inter-carrier interference. The most critical symbols may be for example those that correspond to systematic bits or any other symbols determined as most critical.

The transmission that comprises a transmission bit stream for transmission, that is, the TX bits, are then received by a receiver 350. An RF frontend unit 355 of the receiver thus receives the signal corresponding to the RX bits, in other words, the received bit stream. The receiver then performs removal of cyclic prefix 356 and after that the serial-to-parallel conversion 358 after which a fast Fourier transformation 360 may be performed. Next, the unit 370 performs frequency domain equalization and subcarrier de-mapping after which an inverse discrete Fourier transformation is performed provided that the transmitter performed the discrete Fourier transformation 318. Next, a parallel-to serial conversion 382 is performed and then, the unit 384 performs demodulation for APM symbols and shift index, such as log-likelihood-ration (LLR). It is to be noted that the demodulation in this example embodiment is to detect both APM symbols and resource set shift index. This detection may be based on hard decisions, and it may be performed in each sub-group by either joint detection of APM symbols and shift index using a joint maximum likelihood (ML) detector for example, or by detecting them sequentially by first estimating the selected RSS-IM (e.g., energy detection, ...) and then proceeding to detect APM symbols. Then, in unit 390, the channel decoding and deinterleaving may be performed for the RX bits.

The soft and hard decision mentioned above may be obtained using log-likelihood-ratio (LLR) for example, and the LLRs may then be directly used with channel coding. For example, if y is considered as the received subcarriers for a given sub-group and x is considered as the subcarriers at transmitter with i-th resource set shift pattern carrying the APM symbols vector s, the LLR for a bit b ("legacy" bit $b^l$ or "shift" $b^s$ bit) may be defined as:

$$L(b) = \log \frac{\Pr(b = 0|\boldsymbol{y})}{\Pr(b = 1|\boldsymbol{y})}$$

Then, $\mathbb{I}$ and $\mathbb{S}$ can be considered as the set of used RSS patterns, or shift index i of size $2^{\lfloor \log_2 N_{shift} \rfloor}$,

and the set of possible APM symbol vectors $\boldsymbol{s}$ respectively. It may now be defined that $\mathbb{I}_{k,\beta}$ ($\mathbb{S}_{k,\beta}$) can be regarded as the subset of possible RSS, (APM symbols), in which the k-th "shift" ("legacy") bit of each element is $\beta = \{0,1\}$. So, the a posteriori probabilities of the k-th "shift" bit $b_k^s$ representing the RSS index are:

$$p(b_k^s = \beta|\boldsymbol{y}) = \sum_{i \in \mathbb{I}_{k,\beta}} \sum_{\boldsymbol{s} \in \mathbb{S}} p(\boldsymbol{y} \mid \boldsymbol{x}_{(s,i)}), \beta = 0,1 \text{ and } k = 0,1 \dots, \lfloor \log_2 N_{shift} \rfloor - 1$$

where each vector $\boldsymbol{x}_{(s,i)}$ of length $\boldsymbol{N_g}$ is based on the shift pattern index i and the symbol vector s of $N_a$ M-ary APM symbols. Then, the a posteriori probabilities of the k-th "legacy" bit $b_k^l$ representing the APM symbols are:

$$p(b_k^l = \beta|\boldsymbol{y}) = \sum_{i \in \mathbb{I}} \sum_{\boldsymbol{s} \in \mathbb{S}_{k,\beta}} p(\boldsymbol{y} \mid \boldsymbol{x}_{(s,i)}), \beta = 0,1 \text{ and } k = 0,1 \dots, N_a \log_2 M - 1$$

Since the subcarriers are orthogonal, the joint probability $p(y|x)$ is now the product of $N_g$ marginal likelihood probability for each subcarrier $p(y_n|x_n)$ within this group. The LLR for all bits in the sub-group is a concatenation of LLRs of all "legacy" bits $b_k^l$ transmitted through APM symbols and "shift" IM bits $b_k^s$ conveyed through the index of RSS. Using hard decision, the "legacy" and "shift" bits are directly deduced as follows $L(b_k) < 0 \rightarrow b_k = 1$, *otherwise* $b_k = 0$. Alternatively, these soft LLR values may be passed to channel decoder.

In the example embodiment of FIG. 3 thus, the indexed element is the shift of activated resource set in general, which consequently also impacts the detection of the transmitted bit stream. The contiguous set of deactivated resources may also provide robustness to false alarms due to the use of contiguous set of SC deactivation in the shift patterns. Additionally, a lower inter-channel interference (ICI) in case of dispersive channel as compared to solutions without usage of IM may be obtained due to a lower number of activated SCs and thus less interference sources.

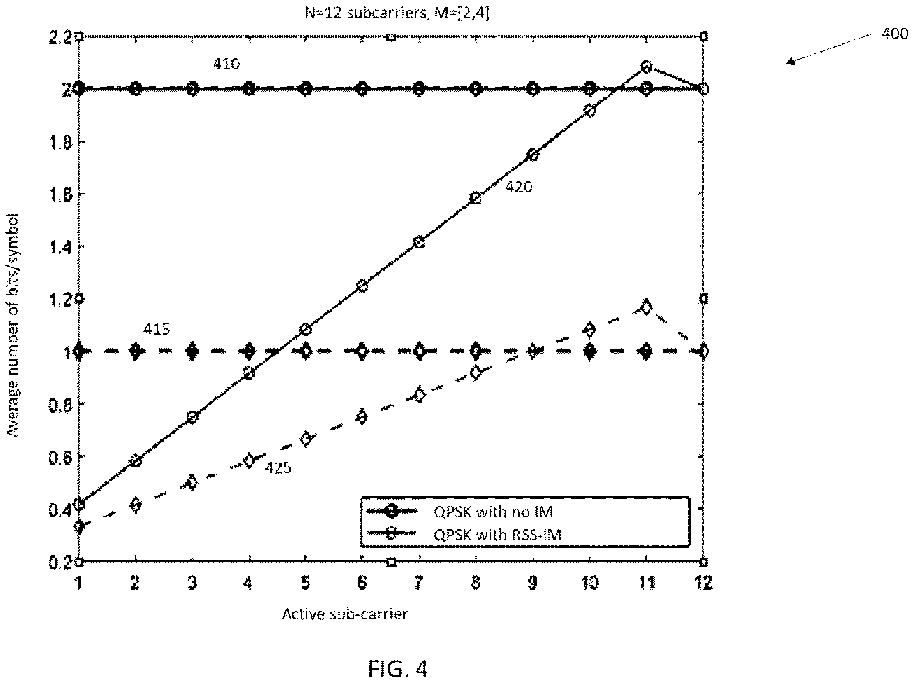

FIG. 4 illustrates a graph 400 for a comparison that illustrates a comparison between the solution introduced in the example embodiment of FIG. 3 and when IM is not utilized. The graph 400 illustrates an average number of bits per SC using OFDM with RSS-IM, as in the example embodiment of FIG.3 and OFDM without the usage of IM. The group size in this example is 1 PRB, but it can be any divisor of the total number of allocated SCs. In the graph, the line 410 illustrates a quadrature phase shift keying (QPSK) when IM is not used and graph 420 illustrates QPSK when RSS-IM is used. The line 415 illustrates binary phase shift keying (BPSK) when IM is not used and line 425 illustrates BPSK when IM is used.

The example embodiment of FIG. 3 may further be reconfigurable, depending on how reliable the channel 345 is, and therefore subject to possible RF impairments such as interference leakage and so on. The possible number of shifts, number of deactivated SC (if any) and discard pattern rules regarding indices may all be configurable parameters via semi-static/dynamic signaling, for example, downlink control information (DCI) or higher layer signaling may be used. Hard coded tabularization in a specification such as a 3GPP specification, may also be possible. For example, different variants may be applicable such as variants 1-4 discussed below.

Variant 1 may be understood as fully reconfigurable in accordance with Table 1 below:

Table 1

| Configuration parameter | Details of possible cases | # Control bits |
|---|---|---|
| Number of shift patterns | 0,2,4,8 ->0 (no IM),1,2, 3 additional IM bits | Up to 2 control bits |
| Discard pattern rule | 0: Lower ACLR, 1: Better detection | 1 control bit |
| Number of deactivated SC | Any integer number | Up to 3 bits |

In this variant there is a discard pattern rule, in other words a discard rule for one or more patterns, as defined below:

- For lower adjacent channel leakage ratio (ACLR) "0", the possible pattern set is generated by favoring those with zero/deactivated SC on the edges of the allocation and by discarding the other patterns.
- For better detection "1", this option favors to increase the shift gap between consecutive patterns (e.g., shift by 2 RE instead by 1 RE), and/or to discard every other shift pattern to reduce the similarity between the possible patterns as was illustrated in FIG. 3 by the "XXX".

Further, in the variant 1, the configuration parameter may further comprise other possible parameters such as number of activated or deactivated REs, number of groups, number of shift patterns, number of RE shift between consecutive patterns or discard pattern rules. For example, the number of shift patterns may be 0, 2, 4, 8 or 16 and/or the number of RE shift may correspond to one RE, two RE, etc. Based on one or more of the configurable parameters along with a known total allocation size N SCs, a scheme and allowed pattern set may be deduced.

For variant 2 there may be pre-defined cases, such as 2, 4 or 8 configurations including one without IM, and allocating 1,2 or 3 control bits. For example, 1 bit may be enough to activate the most advantageous RSS-IM configuration for coverage.

For variant 3 IM may be disabled when all shifts are discarded, and an integer number of possible discard patterns, e.g., 2, can be configured using higher-layer signaling, that is higher than layer 1 signaling, or DCI. For example, there may be a 3-bit codeword [x y z] where:

- [0 0 0] indicates to disable the RSS-IM (i.e., all shifts are discarded),
- [x 0 1], [x 1 0] and [x 11 ] indicate that 4, 8 or 16 shifts are used respectively or used to select one of the 3 pre-configured options in modex,
- [0 y z] and [1 y z] are used to toggle between two modes to configure the shift given by y and z (e.g., two higher layer configured tables indicating predefined possible configuration for example the 4, 8 or 16 shifts). It is to be noted that the number of bits to toggle different modes (here bit x) may also be larger to toggle between different tables.

It is to be noted that the bit x may be omitted and implicitly deduce from another configuration parameter like MCS. For example, MCS with binary phase-shift keying implicitly select mode 1 table, MCS with QPSK implicitly selects mode 2 table etc.

For variant 4 there may be implicit dynamic switching. When a legacy mode without IM is used by default, there may be a switch to most advantageous RSS-IM having same transport block size (TBS) for example in the retransmissions and/or repetitions or based on request from a terminal device or configuration of an access node such as a gNB. Alternatively, RSS-IM with power boost may be used in the slots where systematic bits exist.

The example embodiments discussed above may thus enable various enhancements. For example, increasing power spectral density (PSD) and thus SNR per activated RE, and energy per activated RE, by lowering the frequency occupation with the ability to maintain same TBS, time domain resource allocation (TDRA), frequency domain resource allocation (FDRA), modulation and coding scheme (MCS) and average energy over allocated resources as without using IM. Additionally, or alternatively, block error rate (BLER) performance may be enhanced such that smaller signal to noise ratio is required for the target BLER as interference (e.g. ICI) is reduced and the detection of contiguous set of inactive resources is robust and, additionally, or alternatively, coding rate can be lowered for better performance by using the additional bits through IM. A further benefit that may be enabled by the example embodiments described above is the technical effect of increased index detection reliability as well as reduction of interference to other users.

Therefore, RSS-IM may offer various benefits. For example, the number of REs carrying digitally modulated symbols per orthogonal frequency division multiplexing (OFDM) symbol transmission decreases thereby allowing the activated REs to benefit from a power boost, and reduced average ACLR due to deactivating a contiguous set of SCs. It is to be noted though that the frequency domain and time domain resources allocations (FDRA and TDRA) could be kept the same as when IM is not utilized. Additionally, or alternatively, more granularities may be provided for the number of bits per OFDM symbol or average number of bits per SC since RSS-IM can increase, decrease or keep the same number of bits as in legacy using same allocation and modulation. Further additionally or alternatively, another dimension for sending additional bits through the index of RSS to compensate for the use of a lower number of activated SCs may be introduced. An equivalent smaller frequency resource may be used. $N_a$ SCs carrying symbols from an M-ary alphabet may be transmitted and additional bits through the index of selected RSS may be conveyed. For example, in a group of $N_g$ RE/SC, there may be that $N_{shift} \leq N_g \in \mathbb{N}$. This may allow to convey an integer number of bits $\lfloor \log_2(N_{shift}) \rfloor$ bits using only $2^{\lfloor \log_2(N_{shift}) \rfloor}$ patterns from the possible $N_{shift}$ patterns. For example, when 1-RE shifts are used within a group (e.g. PRB), there may be $N_{shift} = N_g = 12$ as illustrated in FIG. 3. From these 12 patterns, 8 patterns are used to convey 3 additional bits using RSS-IM. Hence, 4 patterns are not needed, and the discarded patterns may be selected based on the optimization of a target metric, e.g., minimization ACLR, maximization of detection reliability of RSS and so on. It is to be noted that any shift value may be used to generate the $N_{shift}$ possible shifts and that the average number of bits per subcarrier (SC) may be defined as:

$$\frac{G(N_a . \log_2(M) + \lfloor \log_2(N_{shift}) \rfloor)}{N}$$

where $G$ is number of groups, $N_a$ is the number of activated SC per group transmitting symbols from an M-ary alphabet, $N_{shift}$ is the number of possible resource set shifts within a group, and $N = G$. $N_g$ is the total number of SC in the allocated frequency resource. It is further to be noted that a group may comprise any number of SC $N_g$, for example, possible options may be at least sub-PRB, 1 PRB, multiple PRBs, or the full allocation.

The maximum peak-to-average-power-ratio (PAPR) of an OFDM signal with an IM scheme according to the example embodiments described above may have $N_a$ active subcarriers from $N_g$ ( $\mu = \frac{N_a}{N_g}$ activation ratio) ($PAPR_{IM}$) which is less than that for OFDM without IM ($PAPR_{OFDM}$) due to the deactivation of some subcarriers, which are set to zero-power, thus yielding in the PAPR reduction or cubic metric (CM) reduction.

It is to be noted that although in the example embodiments described above the IM is discussed in the context of deactivation of contiguous subcarriers with patterns of resource shifts for OFDM, the approach may be applicable to other IM domains as well. For example, patterns for contiguous antenna deactivation based on having the antennas indexed in spatial domain or patterns for contiguous time parts, such as symbol periods, being deactivated in time domain may utilize the same approach.

By using a pattern to deactivate a contiguous set of resources helps to alleviate detection related ambiguity of an indexed transmission state thereby achieving better performance and detection capability. By using an optimized bit interleaver at Tx side, and by having a corresponding deinterleaver at the Rx side, the most critical bits may be mapped to the most robust mapper such for improving robustness and achieving better channel decoding correction capability.

In addition to a pattern for deactivating contiguous resources, there may be a pattern for discarding resources, such as subcarriers, and the pattern for discarding may favor edge resources to achieve lower ACLR and smaller interference for adjacent allocated users in frequency domain especially if the latter are in poor coverage. In time domain, such discarding patterns may achieve lower interference for adjacent allocated users especially if the latter are in poor coverage or if a prefix part is used at Rx.

For using deactivation of a contiguous resource set in the context of IM, there may be an adaptive symbol level interleaver at Tx side as well as a corresponding deinterleaver at Rx side. The interleaver may then map the most critical symbols, that may be APM symbols, corresponding to critical bits to adjacent position(s) of deactivated resources thus achieving robustness and improved channel decoding correction capability. In case the resources comprise subcarriers, then subcarriers that are adjacent to deactivated resources may have lower ICI since the highest ICI contribution is from nearest SCs. For example, the most critical APM symbols may be mapped on each group starting adjacent to the edge of deactivated resources from each possible side onwards towards the middle of group. It is further to be noted that the interleaver, which may be a bit and symbol level interleaver, may be used separately or together for two levels of protection for critical bits or their corresponding symbols.

It is further to be noted that the example embodiments and approaches discussed above may also be utilized in the context of MIMO. Also, multicarrier waveforms, such as universal filtered multicarrier (UFMC) or filter bank multicarrier (FBMC), as well as transform based single carriers may utilize the above-described approach. Transform may be for example DFT.

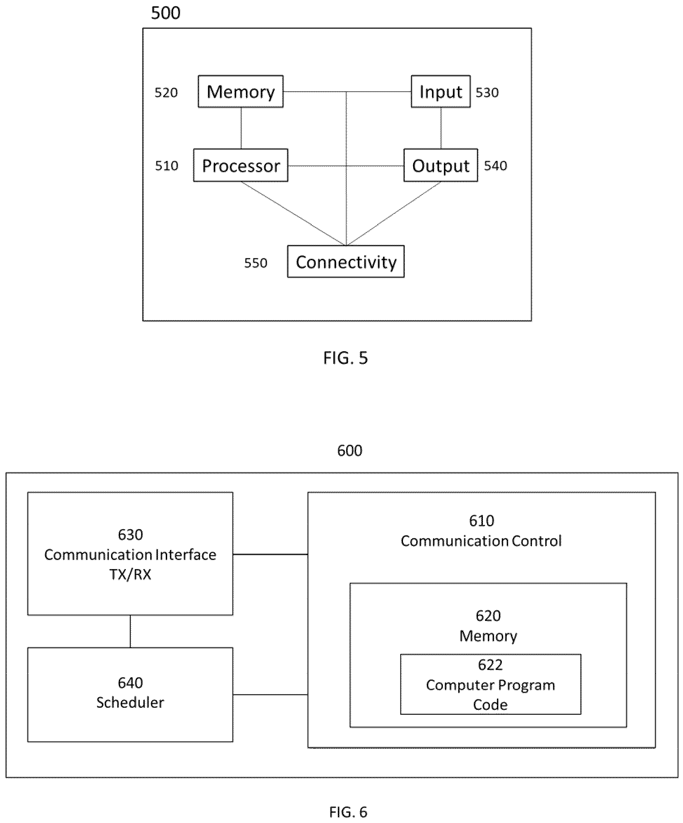

FIG. 5 illustrates an apparatus 500, which may be an apparatus such as, or comprised in, a terminal device, according to an example embodiment. The apparatus 500 comprises a processor 510. The processor 510 interprets computer program instructions and processes data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 stores computer readable instructions that are execute by the processor 510. For example, non-volatile memory stores the computer readable instructions and the processor 510 executes the instructions using volatile memory for temporary storage of data and/or instructions.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 500 further comprises, or is connected to, an input unit 530. The input unit 530 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 530 may comprise an interface to which external devices may connect to.

The apparatus 500 also comprises an output unit 540. The output unit comprises or is connected to one or more displays capable of rendering visual content such as a light emitting diode, LED, display, a liquid crystal display, LCD and a liquid crystal on silicon, LCoS, display. The output unit 540 further comprises one or more audio outputs. The one or more audio outputs may be for example loudspeakers or a set of headphones.

The apparatus 500 may further comprise a connectivity unit 550. The connectivity unit 550 enables wired and/or wireless connectivity to external networks. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

It is to be noted that the apparatus 500 may further comprise various component not illustrated in the FIG. 5. The various components may be hardware component and/or software components.

The apparatus 600 of FIG. 6 illustrates an example embodiment of an apparatus that may be an access node or be comprised in an access node, and that may embody the architecture used for beamforming described above. The apparatus may be, for example, a circuitry or a chipset applicable to an access node to realize the described embodiments. The apparatus 600 may be an electronic device comprising one or more electronic circuitries. The apparatus 600 may comprise a communication control circuitry 600 such as at least one processor, and at least one memory 620 including a computer program code (software) 622 wherein the at least one memory and the computer program code (software) 622 are configured, with the at least one processor, to cause the apparatus 600 to carry out any one of the example embodiments of the access node described above.

The memory 620 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 600 may further comprise a communication interface 630 comprising hardware and/or software for realizing communication connectivity according to one or more communication protocols. The communication interface 630 may provide the apparatus with radio communication capabilities to communicate in the cellular communication system. The communication interface may, for example, provide a radio interface to terminal devices. The apparatus 600 may further comprise another interface towards a core network such as the network coordinator apparatus and/or to the access nodes of the cellular communication system. The apparatus 600 may further comprise a scheduler 640 that is configured to allocate resources.

Even though the invention has been described above with reference to example embodiments according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1.  An apparatus comprising

    means for obtaining a transmission bit stream for transmission on at least one resource set;
    means for allocating the transmission bit stream, at least partly, to a sub-stream;
    means for determining an index based on the sub-stream;
    means for determining, based on the index, a shift of a contiguous resource set, wherein the contiguous resource set is a subset of the at least one resource set;
    means for applying the shift to the contiguous resource set; and
    means for deactivating the shifted contiguous resource set.

2.  The apparatus according to claim 1, wherein determining of the shift of the contiguous resource set comprises at least one of the following: determining a frequency location of resources of the contiguous resource set, determining a frequency shift of the contiguous resource set, or determining a cyclic shift of the contiguous resource set.

3.  The apparatus according to claim 1 or 2, wherein the transmission bit stream is allocated partly to the sub-stream and partly to a second sub-stream, and the apparatus further comprising means for determining a relative complement of the contiguous resource set with respect to the at least one resource set, and use resources of the relative complement to transmit symbols of M-ary amplitude phase modulation, wherein the symbols are modulated by the second sub-stream.

4.  The apparatus according to any previous claim, wherein the at least one resource set comprises a group of subcarriers comprising at least one resource block.

5.  The apparatus according to any previous claim, wherein the apparatus further comprising means for determining the index in accordance with an indexation pattern.

6.  The apparatus according to claim 5, wherein a discard rule is applied to the indexation pattern to determine if the indexation pattern is an allowable pattern or if the indexation pattern is to be discarded.

7.  The apparatus according to claim 5 or 6, wherein the discard rule is configurable based on at least one of the following configurable parameters: a first number of deactivated or activated subcarriers, a second number of shifts, or indices of patterns to be discarded.

8.  The apparatus according to claim 7, wherein the at least one of the configurable parameters is indicated using at least one of the following downlink control information signaling or higher layer signaling.

9.  The apparatus according to claim 5, wherein the indexation pattern is at least one of the following: the frequency location of the resources of the contiguous resource set, the frequency shift of the contiguous resource set, or the cyclic shift of the contiguous resource set.

10. The apparatus according to any previous claim, wherein the apparatus further comprising interleaving systematic bits, on a bit level, to at least one of the following: to the sub-stream, or to the second sub-stream based on robustness of the sub-stream and the second sub-stream.

11. The apparatus according to any previous claim, wherein the apparatus further comprising means for interleaving symbols, that are determined as most critical symbols, to an edge of the shifted contiguous resource set.

12. The apparatus according to any previous claim, wherein deactivating the shifted contiguous resource set comprises deactivating explicit data transmission on the shifted contiguous resource set.

13. An apparatus comprising:

> means for receiving a transmission on at least one resource set;
> means for determining that a contiguous resource set is deactivated, wherein the contiguous resource set is a subset of the at least one resource set;
> means for determining a shift applied to the contiguous resource;
> means for determining an index based on the shift; and
> means for detecting, at least partly based on the index, a transmission bit stream comprised in the transmission.

14. A method comprising:

> obtaining a transmission bit stream for transmission on at least one resource set;
> allocating the transmission bit stream, at least partly, to a sub-stream;
> determining an index based on the sub-stream;
> determining, based on the index, a shift of a contiguous resource set, wherein the contiguous resource set is a subset of the at least one resource set;
> applying the shift to the contiguous resource set; and
> deactivating the shifted contiguous resource set.

15. A method comprising:

> receiving a transmission on at least one resource set;
> determining that a contiguous resource set is deactivated, wherein the contiguous resource set is a subset of the at least one resource set;
> determining a shift applied to the contiguous resource;
> determining an index based on the shift; and
> detecting, at least partly based on the index, a transmission bit stream comprised in the transmission.

FIG. 1

FIG. 2

FIG. 3

FIG. 4

500

FIG. 5

600

FIG. 6

Europäisches Patentamt
European Patent Office
Office européen des brevets

## EUROPEAN SEARCH REPORT

Application Number

**EP 23 20 2876**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZOU JUN ET AL: "Index Modulation Based on Four-Dimensional Spherical Code and Its DNN-Based Receiver Design", IEEE TRANSACTIONS ON VEHICULAR TECHNOLOGY, IEEE, USA, vol. 70, no. 12, 14 October 2021 (2021-10-14), pages 13401-13405, XP011894417, ISSN: 0018-9545, DOI: 10.1109/TVT.2021.3120262 [retrieved on 2021-12-17] * figure 1 * * Section II. * | 1-15 | INV. H04L5/00 H04L27/26 H04L27/30 |
| X | MANCO-VASQUEZ JULIO ET AL: "Tailoring Index-Modulation for uplink IoT and M2M Networks", 2019 IEEE WIRELESS COMMUNICATIONS AND NETWORKING CONFERENCE (WCNC), IEEE, 15 April 2019 (2019-04-15), pages 1-6, XP033652088, DOI: 10.1109/WCNC.2019.8885713 [retrieved on 2019-10-28] * figure 1 * * Sections II. to IV. * | 1-15 | |

TECHNICAL FIELDS SEARCHED (IPC)

H04L

The present search report has been drawn up for all claims

| Place of search | Date of completion of the search | Examiner |
|---|---|---|
| Berlin | 13 March 2024 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)